# FASCICULE DE BREVET EUROPEEN

(11) **EP 0 708 062 B1**
(45) Date de publication et mention de la délivrance du brevet: **09.05.2001**
(21) Numéro de dépôt: 95402159.8
(22) Date de dépôt: 27.09.1995
(51) Int. Cl.: C03C 17/00, C03C 17/245

(54) **Technique de dépôt de revêtements par pyrolyse de composition de gaz précurseur(s)**
Pyrolytische Beschichtungstechnik von gasförmigen Ausgangsgemischen
Pyrolytic coating technique of gaseous precursor compositions

(30) Priorité: 27.09.1994 FR 9411505
(43) Date de publication de la demande: 24.04.1996
(73) Titulaire: SAINT-GOBAIN GLASS FRANCE, 92400 Courbevoie (FR)
(72) Inventeur: Oudard, Jean-Françoisl, F-60310 Thiescourt (FR); Jacquet, Patrice, F-60350 Pierrefonds (FR); Crampon, Pascal, F-60280 Margny les Compiegne (FR)
(74) Mandataire: Breton, Jean-Claude

(56) Documents cités:
- EP-A- 0 499 523
- EP-A- 0 499 524
- EP-A- 0 518 755
- FR-A- 2 348 166

## Description

L'invention concerne une technique de dépôt de revêtements obtenus par réaction de pyrolyse/décomposition de gaz ou mélange de gaz dit(s) précurseur(s) sur des substrats chauds en mouvement du type ruban de verre float. L'invention concerne plus particulièrement le dispositif pour mettre en oeuvre cette technique désignée usuellement sous le terme « CVD » (Chemical Vapor Deposition), et notamment la buse qui permet de distribuer et de canaliser vers le substrat à recouvrir le ou les courants de gaz précurseurs aptes à pyrolyser ou à se décomposer de manière appropriée à son contact.

Il est déjà connu, notamment des demandes de brevet EP-A-0 499 523, EP-A-0 499 524 et EP-A-0 518 755, des buses de distribution de ce type, aptes à être placées à l'intérieur de l'enceinte d'un bain de flottage (float) transversalement par rapport à l'axe de défilement du ruban de verre glissant à la surface du bain d'étain fondu. Ces buses comprennent une chambre d'admission alimentée en gaz adéquat. Le flux gazeux émis à partir de cette chambre d'admission est ensuite guidé le long d'un canal d'injection ayant une section en U (de deux canaux dans le cas de la demande de brevet EP-A-0 499 524) et défini par les parois d'un bloc central flanqué de talons « amont » et « aval » par rapport à l'axe de défilement du ruban. Le flux gazeux effectue de cette manière un trajet en écoulement laminaire à la surface du verre le long de cet axe, trajet au cours duquel a lieu la pyrolyse des gaz précurseurs appartenant à ce flux. Le flux gazeux, une fois appauvri, est évacué par des dispositifs d'aspiration en sortie du canal de guidage.

Cette technique de dépôt est très intéressante sur le plan économique puisqu'elle permet l'obtention de revêtements directement sur le ruban de verre float, en continu, avec des dispositifs plus simples et des conditions de dépôt moins contraignantes que par exemple les techniques de dépôt utilisant le vide de type pulvérisation cathodique. En outre, les revêtements déposés par CVD présentent, en règle générale, une adhérence élevée au substrat et une qualité ainsi qu'une durabilité satisfaisantes.

Cependant, le ruban de verre float à recouvrir présente usuellement une largeur d'au moins 2 mètres, notamment de l'ordre de 3 à 4 mètres. C'est donc sur cette largeur, qui est considérable, que les buses de distribution ont à répartir le flux gazeux de la manière la plus homogène possible pour assurer, au moins transversalement à l'axe de défilement du ruban, une certaine constance dans la qualité et/ou l'épaisseur du revêtement déposé.

Dans le cas des buses décrites dans les trois demandes de brevet précitées, la répartition s'effectue dans une chambre d'admission située en partie supérieure, chambre alimentée en gaz à l'aide d'un conduit d'amenée véhiculant le ou les gaz précurseur(s) en suspension dans un gaz inerte du type azote et percé d'orifices régulièrement répartis sur toute sa portion qui se trouve dans la chambre et transversale à l'axe de défilement du ruban. Ce type d'alimentation en gaz des buses a le mérite d'être simple à réaliser et à contrôler, puisqu'il n'utilise qu'un seul conduit sur lequel composition et débit de gaz sont à régler. Il s'avère en outre parfaitement adapté pour déposer des revêtements de qualité standard. Par contre, il peut se révéler insuffisant si l'on exige l'obtention de revêtements extrêmement uniformes, notamment en termes d'épaisseur, dans la mesure où un tel système ne permet pas d'assurer que chacun des jets de gaz qui sortent des orifices du conduit présente exactement les mêmes caractéristiques que les autres, en termes de débit tout particulièrement.

L'invention a alors pour but de pallier cet inconvénient en optimisant le mode d'alimentation en gaz des buses de distribution utilisées dans des techniques de dépôt du type CVD, notamment afin qu'il garantisse une meilleure homogénéité dans la répartition des flux de gaz utilisés sans trop sacrifier à la simplicité de mise en oeuvre.

L'invention a pour objet un procédé utilisant une buse de distribution de courant(s) de gaz précurseur ou de mélange de gaz précurseur à la surface d'un substrat verrier en mouvement du type ruban de verre float, gaz apte(s) à former au contact de celui-ci un revêtement par une réaction du type pyrolyse/décomposition. La buse est équipée d'un système d'alimentation comprenant tout d'abord une alimentation en gaz dite principale du corps de buse et utilisant un moyen d'amenée de gaz commun pour chacun des courants à générer. Dans le sens de l'invention, "principale" signifie que c'est cette alimentation qui pourvoit pour l'essentiel à la fourniture de la quantité de gaz précurseurs nécessaire au dépôt d'un revêtement d'épaisseur moyenne donnée.

En outre, l'alimentation comporte également une alimentation en gaz dite auxiliaire, autonome par rapport à l'alimentation principale et qui est destinée à modifier localement la composition chimique du (des) courant(s) généré(s) par l'alimentation dite principale. Pour ce faire, cette alimentation auxiliaire peut générer dans ou à proximité dudit (desdits) courant(s) au moins une veine gazeuse contenant au moins un gaz précurseur nécessaire à la formation du revêtement. Dans le sens de l'invention, "auxiliaire" signifie que cette alimentation pourvoit plutôt de manière minoritaire à l'alimentation de la buse, notamment en véhiculant qu'un seul des précurseurs nécessaires.

L'invention a également pour objet, le système, tel que défini dans la revendication 6, comprenant les moyens pour fabriquer et/ou mettre en mouvement un substrat verrier (de type ruban de verre float) et une buse employée selon le procédé ci-dessus.

De préférence, on utilise cette alimentation secondaire en vue de corriger ou prévenir toute irrégularité dans l'épaisseur ou la qualité du revêtement déposé. Cette alimentation secondaire, en modifiant localement la composition chimique du ou des courants va pouvoir suppléer, le cas échéant, à son (ou à leurs) inhomogénéités locales. La veine gazeuse précédemment évoquée joue alors le rôle d'une veine "compensatrice" qui contient avantageusement au moins un des gaz précurseurs véhiculés par l'alimentation principale et qui est de composition, débit et localisation appropriés pour parvenir à rectifier ces inhomogénéités : "compensatrice" implique en effet qu'elle a pour fonction de supprimer ou à tout le moins d'atténuer les disparités de répartition de l'alimentation principale en « injectant », là ou cela s'avère nécessaire, la quantité et la composition de gaz appropriées. Cela n'exclut cependant pas qu'elle puisse également avoir pour fonction de compléter quantitativement l'apport de précurseurs nécessaires pour obtenir un revêtement de composition et d'épaisseur voulues.

En « doublant », en « assistant » ainsi l'alimentation principale d'une alimentation auxiliaire correctrice, l'invention permet d'obtenir des revêtements présentant des variations d'épaisseurs mesurées transversalement à l'axe de mouvement des substrats extrêmement faibles, ce qui va donc dans le sens d'une amélioration notable de leur qualité. En effet, quand le substrat est un ruban de verre float et que le revêtement est déposé avec des épaisseurs interférentielles, toute variation d'épaisseur trop significative entraîne au moins des défauts de nature optique, tels que des effets d'irisation peu esthétiques.

On peut souligner que la solution apportée par l'invention pour résoudre les problèmes d'inhomogénéité dans l'alimentation en gaz des buses est originale et surprenante à plus d'un titre. En effet, la première idée qui viendrait à l'esprit de l'homme de l'art serait plutôt d'essayer d'agir directement sur l'alimentation dite « principale » plutôt que d'en créer une seconde en parallèle. En outre, rien ne permettait de garantir l'efficacité des veines de gaz générées par l'alimentation « auxiliaire » selon l'invention, car on pouvait au contraire s'attendre à ce que ces veines qui se trouvent à proximité des courants principaux s'y trouvent « diluées » sans parvenir à corriger localement, de manière précise et contrôlée, leur inhomogénéité.

On conserve cependant au syst ème d'alimentation une certaine simplicité de mise en oeuvre, dans la mesure où l'on peut utiliser sans changement en tant qu'alimentation « principale » des alimentations classiques à conduit d'amenée unique. Concrètement, l'invention ne nécessite donc pas de bouleverser les installations de dépôt par CVD existantes, ce qui est toujours un point avantageux lorsqu'on travaille à l'échelle industrielle.

Il est en outre aisé de prévoir des moyens pour moduler de manière fine, débit, composition et localisation des veines de gaz de l'alimentation auxiliaire, car l'alimentation auxiliaire véhicule une quantité minoritaire de gaz précurseurs et utilise donc des débits gazeux en général bien plus faibles que ceux impliqués utilisés dans le conduit de l'alimentation principale.

De préférence, courant(s) et veine(s) de gaz générés par le système d'alimentation de la buse sont à écoulement laminaire, ce qui optimise le trajet des gaz précurseurs le long de la surface du substrat à recouvrir et garantit au mieux le cantonnement des veines de gaz dans ou à côté des courants gazeux, donc leur efficacité.

La buse de distribution est particulièrement adaptée pour faire des dépôts de revêtements sur un ruban de verre float, en étant disposée au-dessus du ruban et transversalement à celui-ci. Elle est munie, dans cette configuration en partie supérieure, d'autant de chambres d'admission alimentées par l'alimentation en gaz principale que de courants à générer.

Selon l'invention, il est avantageux de choisir une alimentation principale de conception relativement simple. Ainsi, cette alimentation peut comporter, pour chacun des courants à générer, un conduit d'amenée de gaz commun se distribuant en une pluralité d'amenées débouchant dans la chambre d'admission appropriée. Un mode de réalisation préféré consiste à ce que cette alimentation comporte pour chaque courant à générer une canalisation véhiculant le gaz précurseur (ou le mélange de gaz précurseurs) approprié et dont une portion, notamment l'extrémité, est percée d'orifices régulièrement répartis et est disposée le long de la chambre d'admission appropriée. Chaque orifice fait ainsi office d'amenée de gaz, la répartition et le nombre des orifices créant une multitude de jets de gaz suffisamment proches les unes des autres pour former un rideau de gaz, un « courant » au sens de l'invention.

Pour que l'alimentation auxiliaire remplisse au mieux sa fonction correctrice/compensatrice de ce ou ces courants pouvant présenter des inhomogénéités locales, il est préférable que la chambre d'admission (ou au moins l'une d'entre elles si elles sont plusieurs) soit alimentée en gaz également par cette alimentation auxiliaire. On s'assure ainsi de la proximité entre courant « principal » et veine(s) auxiliaire(s).

L'alimentation auxiliaire peut être conçue par exemple de deux manières différentes : Elle peut comporter une pluralité d'amenées de gaz de configuration fixe pendant le fonctionnement de la buse, débouchant dans la chambre d'admission adhoc et réparties régulièrement sur la longueur de ladite chambre. Les amenées peuvent alors, ensemble ou alternativement, générer où cela est nécessaire et quand cela est nécessaire la ou les veines gazeuses aptes à homogénéiser le courant gazeux en question.

Elle peut aussi comporter au moins une amenée de gaz, débouchant dans la chambre d'admission, mais montée mobile pendant le fonctionnement de la buse, notamment selon un axe parallèle à la longueur de ladite chambre. Par des mouvements de translation, les amenées peuvent continuer « d'intervenir » là où cela est nécessaire en étant en nombre beaucoup plus réduit que dans le cas précédent.

Concernant le type de gaz que l'alimentation auxiliaire est destinée à véhiculer, il y a là encore notamment deux façons de procéder, dans le cas où l'alimentation principale véhicule un mélange de gaz précurseurs, et non pas un seul gaz précurseur, ce qui est le cas le plus fréquent.

L'alimentation auxiliaire peut être apte à générer des veines du même mélange gazeux que celui véhiculé par l'alimentation principale, éventuellement dans les mêmes proportions relatives entre précurseurs. Cela revient ainsi à ce que la (ou les) veine(s) de gaz de l'alimentation auxiliaire vienne(nt) localement augmenter le débit de gaz dans le courant issu de l'alimentation principale, dans le but de compenser localement une baisse de débit dans ledit courant. Uniformiser ainsi le débit conduit alors au résultat recherché, qui est d'uniformiser l'épaisseur du revêtement puisque le rendement de la réaction de pyrolyse/décomposition, donc l'épaisseur de revêtement déposé, dépend de la quantité de gaz précurseurs mis en jeu.

L'alimentation auxiliaire peut aussi être apte à générer des veines de composition gazeuse différente de celle du courant issu de l'alimentation principale, et notamment ne comporter qu'un seul des gaz précurseur(s) ou même un gaz précurseur nécessaire mais non véhiculé par l'alimentation, principale.. La veine de gaz de l'alimentation auxiliaire modifie alors localement la proportion entre précurseurs du courant principal, ce qui va pouvoir permettre localement d'augmenter le rendement de pyrolyse impliquant une réaction entre précurseurs. On aboutit alors au même résultat que dans le cas précédent si l'on choisit de manière adéquate le précurseur de l'alimentation auxiliaire, qui peut être notamment soit le plus simple à véhiculer, soit celui qui « gouverne» la stoechiométrie de la réaction entre précurseurs (quand un des précurseurs est utilisé en excès par rapport à l'autre, par exemple).

Il va de soi que toute solution « intermédiaire » consistant à utiliser dans l'alimentation auxiliaire plus d'un des précurseurs de l'alimentation principale, mais pas forcément l'ensemble des gaz précurseurs ni forcément dans les mêmes proportions, est également tout-à-fait envisageable dans le cadre de l'invention. Tout est alors affaire de dosage en fonction de la nature des précurseurs et de la nature du revêtement à déposer, afin d'ajuster au mieux la manière dont les veines de gaz vont modifier localement la réaction de pyrolyse des précurseurs du courant de gaz principal.

Pour que l'alimentation auxiliaire puisse remplir sa fonction, il est important de prévoir des moyens de contrôle de débit, du type vanne, sur la (ou chacune des) amenée(s) de gaz de celle-ci, afin de pouvoir contrôler et réguler le débit ou le profil de débit des veines de gaz qu'elle(s) génère(nt). Un mode de réalisation préféré consiste alors en une pluralité d'amenées de gaz débouchant dans la chambre d'admission de courant de gaz que l'on souhaite uniformiser, en des points régulièrement répartis sur la longueur de ladite chambre, chaque amenée étant munie d'une vanne apte à délivrer 0 ou 100% d'un débit de gaz prédéterminé, et éventuellement tout débit intermédiaire entre ces deux valeurs extrêmes. L'alimentation auxiliaire peut ainsi fonctionner en « tout ou rien », avec fermeture complète des amenées de gaz dans les zones où il n'est pas nécessaire de générer des veines de gaz parce que le courant présente un degré d'uniformité satisfaisant. Elle peut tout aussi bien fonctionner de manière à ce que toutes ou au moins une partie des amenées de gaz délivrent en permanence un certain débit moyen (qui reste faible par rapport au débit des amenées de gaz de l'alimentation principale), débit qui peut être localement diminué ou augmenté. On crée alors un certain « profil » de débit par l'ensemble des veines de gaz.

L'alimentation auxiliaire tient avantageusement compte du facteur temps, dans la mesure où les éventuelles inhomogénéités du ou des courants générés par l'alimentation principale évoluent pendant le fonctionnement de la buse, l'évolution pouvant consister en un déplacement de l'inhomogénéité locale du courant, et/ou en une diminution ou une amplification de ladite homogénéité, ce qui se traduit par une évolution correspondante de l'irrégularité d'épaisseur du revêtement déposé.

La régulation de l'alimentation auxiliaire dans le temps peut être manuelle, par simple commande manuelle des vannes des amenées de gaz en réponse à une détection, « en aval » de la buse, d'un défaut d'épaisseur local du revêtement déposé.

La régulation de l'alimentation auxiliaire peut aussi être automatisée, ce qui peut permettre des modifications de réglage des débits plus fins et/ou plus rapides en réponse à une détection de défaut sur le revêtement. Peut être alors mis en place pour ce faire un système de réglage automatique dans le temps des vannes des amenées de gaz de l'alimentation auxiliaire, à l'aide d'une unité de contrôle reliée à au moins un instrument de mesure de qualité ou d'épaisseur du revêtement en « aval » de la buse.

L'invention peut être appliquée au dépôt par pyrolyse de gaz de revêtements très divers, par exemple des revêtements de couches à base de Si,O,C comme ceux décrits dans la demande de brevet EP-A-0 518 755. Dans ce cas, on préfère que l'alimentation principale génère un courant gazeux comprenant précurseur(s) de silicium et précurseur(s) de carbone et que l'alimentation auxiliaire génère si besoin une ou plusieurs veines de gaz comprenant seulement l'un ou l'autre des deux types de précurseurs, et plutôt le(s) précurseur(s) de carbone. Elle peut aussi s'appliquer au dépôt de couches de nitrure métallique du type TiN comme décrit dans la demande de brevet français FR-93/09916 déposée le 12 août 1993 et dans la demande de brevet français FR-93/13023 déposée le 2 novembre 1993.

L'invention a également pour objet le procédé de mise en oeuvre de la buse de distribution précédemment décrite, procédé qui prévoit d'alimenter la buse avec une alimentation principale équipée d'un conduit d'amenée commun pour chaque courant à distribuer avec un débit donné pour des caractéristiques de revêtement, notamment une épaisseur, données. Ledit procédé prévoit en outre une alimentation auxiliaire de la buse munie d'amenées de gaz délivrant chacune un débit de gaz réglable dans le temps entre O et 100% d'une valeur de débit donnée.

Les détails et caractéristiques avantageuses de l'invention vont maintenant ressortir des modes de réalisation non limitatifs suivants, illustrés à l'aide des figures :
- **figure 1** : une représentation schématique en coupe transversale d'une buse de distribution selon l'invention,
- **figure 2** : une représentation schématique en coupe longitudinale de la chambre d'admission des gaz de la buse selon la figure 1 et de ses deux modes d'alimentation en gaz.

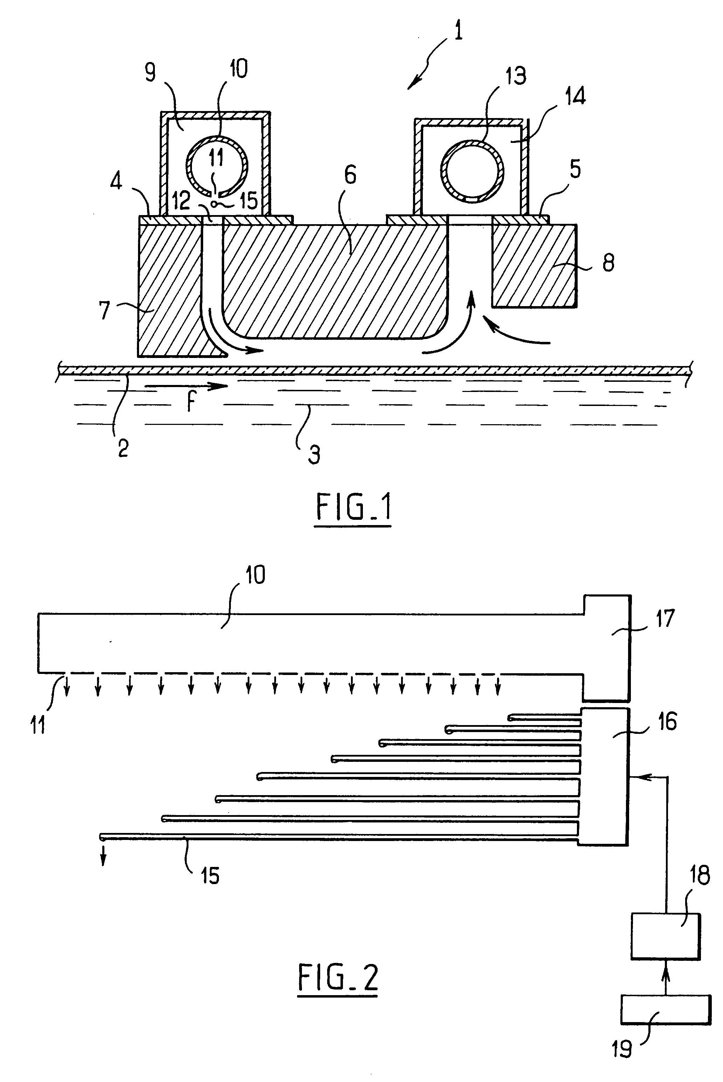

La figure 1 représente donc une buse de distribution pour le dépôt de revêtement par CVD sur verre float. Elle est une optimisation de la buse décrite dans la demande de brevet EP-A-0 518 755 précité dans la mesure où elle est équipée de l'alimentation en gaz faisant l'objet de l'invention. Pour plus de renseignements concernant le fonctionnement général d'une telle buse, on se rapportera avantageusement à cette demande ou à l'une de celles précédemment mentionnées.

La figure 1 montre la buse 1 en position de fonctionnement à l'intérieur de l'enceinte d'un bain de flottage, enceinte non représentée. On y voit le ruban de verre 2 surnageant à la surface du bain d'étain fondu 3. Au-dessus du ruban 2, dans une zone où il a déjà acquis une stabilité dimensionnelle, est donc montée la buse 1 transversalement au ruban. Elle s'étend sur toute la longueur de ce dernier. Elle comprend un profilé de section en U retourné dont les bords des parois verticales sont fixés sur des consoles horizontales 4, 5 et qui comprend un bloc central 6, un talon dit amont 7 et un talon dit aval 8 (« amont » et « aval » font référence au sens de défilement du verre symbolisé par la flèche). Ces parois définissent un canal de guidage du gaz qui se décompose en un canal d'injection vertical entre talon amont 7 et bloc central 6, un canal horizontal entre bloc central 6 et surface du verre et un canal de nouveau vertical entre bloc central 6 et talon aval 8. Ce canal est alimenté en gaz précurseur par une chambre d'admission 9 où est logé un conduit d'amenée de gaz 10 percé sur toute sa longueur d'orifices 11 régulièrement répartis et qui prolonge une canalisation reliée à une source de gaz appropriée. L'ensemble des jets de gaz issus de ces orifices crée un courant gazeux qui s'écoule à travers l'ouverture 12.

Normalement, le courant ainsi généré et contenant le(s) précurseur(s) en suspension dans un gaz inerte est relativement uniforme sur toute sa longueur, qui correspond à la largeur du ruban de verre 2. Mais on ne peut garantir une répartition absolument régulière dans les orifices 11, ni qu'ils présentent tous un diamètre exactement identique, ni qu'ils puissent distribuer tous le même débit de gaz, selon qu'ils se trouvent à l'une ou l'autre des extrémités du conduit 10 logé dans la chambre d'admission 9.

Peuvent donc apparaître localement dans le courant sortant de la fente 12 des inhomogénéités de débit pouvant conduire à des irrégularités dans l'épaisseur du revêtement déposé. L'invention prévoit en conséquence une alimentation en gaz auxiliaire sous forme d'une pluralité de petits conduits d'amenée 15 d'au moins un des gaz précurseurs, qui ont un diamètre très faible chacun par rapport au diamètre du conduit d'amenée principal 10 et qui débouchent dans la chambre d'admission 9 en différents points régulièrement répartis sur la longueur de ladite chambre. Leur configuration et mode de fonctionnement seront vus plus en détail à l'aide de la figure 2.

Par ailleurs, pour achever la description de la buse en général, il faut signaler qu'un dispositif d'aspiration 13 est disposé dans la chambre d'évacuation 14 disposée à la fin de la dernière portion verticale du canal de guidage du gaz, afin d'aspirer le courant gazeux appauvri de la quantité de gaz précurseur qui a réagi au contact du verre chaud pour déposer le revêtement. On évite ainsi qu'il ne se déverse dans l'atmosphère du bain de flottage, qui est un mélange H₂/N₂ soigneusement contrôlé.

Si l'on se rapporte maintenant à la figure 2 (très schématique), on voit plus précisément la disposition relative dans la chambre d'admission du conduit 10 d'alimentation principale et de la multitude de très petits conduits 15 de l'alimentation auxiliaire. Il va de soi que ce n'est qu'un exemple de configuration non limitatif. Ainsi, les conduits 15 peuvent également être disposés selon un axe non parallèle à celui du conduit principal 10, et par exemple être disposés perpendiculairement à ce dernier. L'important est que les jets de gaz sortant des orifices 11 soient proches de ceux que peuvent émettre les conduits 15, et qu'à une répartition régulière d'orifices 11 « puisse correspondre » une répartition régulière d'orifices d'émission de conduits 15. Le conduit 10 se trouve au-dessus de la série de petits conduits 15, qui sont tous reliés, hors chambre, à une source de gaz 16 différente de la source de gaz 17 alimentant le conduit 10. Le conduit 10 est alimenté d'un mélange de gaz précurseurs dans une proportion et avec un débit donnés, en suspension dans de l'azote pour obtenir un revêtement de nature et d'épaisseur données.

De chacun des orifices 11 sort un jet de gaz. Par ailleurs, chacun des conduits 15 est apte à délivrer également un jet de gaz de composition donnée et dont le débit est régulé à l'aide de vannes électrocommandées par une unité de contrôle 18 connectée à au moins un dispositif 19 de mesure transversale d'épaisseur de revêtement déposé en aval de la buse. La configuration des orifices de sortie des conduits 15 est telle que les jets de gaz qu'ils peuvent émettre sont de même sens et direction que ceux émis par les orifices 11. On peut prévoir un seul instrument balayant en continu la largeur du ruban de verre ou une pluralité d'instruments en plusieurs points de ladite largeur.

Dès que l'unité de contrôle détecte dans les mesures fournies par le(s) dispositif(s) 19 du type réflectomètre(s) une différence d'épaisseur locale dépassant un seuil de tolérance donné, elle déclenche l'ouverture de la ou des vannes d'au moins un des conduits 15 afin qu'il(s) génére(nt) une veine de gaz destinée à compenser l'inhomogénéité du courant provenant du conduit 10 qui a provoqué la diminution localisée de l'épaisseur du revêtement. La veine de gaz va se trouver « incluse » dans le courant mais ne s'y « dilue » pas, ou peu, ce qui lui donne son efficacité.

Ce mode d'alimentation a été appliqué pour fabriquer conformément à la demande de brevet EP-A-0 518 755 un revêtement à base de Si, O et C.

Le conduit 10 est alimenté par un mélange SiH₄, éthylène en suspension dans de l'azote, chacun des conduits 15 étant susceptible de délivrer seulement de l'éthylène dans de l'azote.

Pour déposer un revêtement de 100 nanomètres et d'indice de réfraction 1,68, le conduit 10 est alimenté par la source 17 en gaz avec les débits volumiques suivants pour chacun des gaz du mélange :
- Q₁ (SiH₄) =: de 7 à 15 litres par minute
- Q₂ (N₂) =: de 40 à 80 litres par minute
- Q₃ (C₂H₄) =: de 40 à 80 litres par minute

Donc en théorie chacun des gaz issus des orifices 11 du conduit présent des débits Q'₁, Q'₂ et Q'₃ en SiH₄, N₂ et C₂H₄ qui sont exactement égaux aux rapport de Q₁, Q₂ et Q₃ sur le nombre d'orifices 11. Or des écarts de débits peuvent exister d'un jet à l'autre. Dès que le profil d'épaisseur transversale du revêtement montre, en conséquence de ces écarts de débit, des variations d'épaisseur supérieures à 5% de l'épaisseur moyenne, l'unité de contrôle 18 ouvre la vanne du conduit 15 concerné pour favoriser localement la réaction entre précurseurs en augmentant localement la proportion d'éthylène du courant de gaz, et supprimer ainsi les diminutions locales d'épaisseur : chaque conduit 15 peut générer un jet de gaz avec un débit d'éthylène allant de 0 à 5 litres par minute).

L'unité de contrôle 18 (ou l'opérateur si l'on n'utilise pas de boucle de régulation) peut se servir avantageusement d'abaques pré-établies pour déterminer quel est le débit d'éthylène à imposer dans le conduit 15 approprié pour corriger une variation d'épaisseur détectée dès qu'elle dépasse un seuil de tolérance donné, ici fixé arbitrairement à 5%.

On obtient ainsi un revêtement particulièrement uniforme en épaisseur, toute irrégularité étant très rapidement corrigée par l'alimentation «auxiliaire» selon l'invention sans avoir à perturber l'alimentation « principale » de la buse.

Par ailleurs, il va de soi que l'alimentation « auxiliaire » de l'invention a été optimisée afin de garantir l'uniformité dans l'épaisseur du revêtement déposé. Mais on pourrait tout aussi bien, sans sortir du cadre de l'invention, utiliser cette alimentation auxiliaire pour créer, cette fois de manière volontaire et contrôlée, des gradients dans l'épaisseur ou la composition chimique du revêtement déposé, à tout le moins transversalement à l'axe de défilement du substrat, si cela s'avérait utile ou avantageux de fabriquer des revêtements présentant de telles caractéristiques.

## Revendications

1. Procédé de distribution de courant(s) de gaz précurseur(s ou de mélange de gaz précurseur(s) à la surface d'un substrat verrier (2) en mouvement du type ruban de verre float par l'intermédiaire d'une buse (1), gaz apte(s) à former au contact de celui-ci un revêtement par une réaction du type pyrolyse/décomposition, ladite buse étant équipée d'un système d'alimentation en gaz comprenant une alimentation en gaz dite principale du corps de buse utilisant un moyen d'amenée des gaz commun pour chaque courant à générer, ***caractérisé en ce qu'on*** modifie localement la composition chimique du(des) courant(s) généré(s) par l'alimentation principale en générant dans ou à proximité dudit(desdits) courant(s) au moins une veine gazeuse contenant au moins un gaz précurseur nécessaire à la formation du revêtement et générée par une alimentation en gaz dite auxiliaire autonome par rapport à l'alimentation en gaz principale.

2. Procédé selon la revendication 1, ***caractérisé en ce qu'en*** vue de corriger ou prévenir toute irrégularité dans l'épaisseur ou la qualité du revêtement déposé, on supplé aux inhomogénéités locales du(des) courant(s) généré(s) par l'alimentation principale en générant dans ou à proximité dudit(desdits) courant(s) au moins une veine gazeuse compensatrice, contenant au moins un des gaz précurseurs véhiculés par l'alimentation principale et de composition, débit et localisation appropriés.

3. Procédé selon la revendication 1 ou 2, ***caractérisé en ce qu'on*** génère par le système d'alimentation de la buse (1) des courants et veines de gaz à écoulement laminaire.

4. Procédé selon l'une des revendications 1 à 3 selon lequel l'alimentation principale génère un courant de mélange de gaz précurseurs, ***caractérisé en ce qu'on*** génère au moins une veine du même mélange gazeux afin de compenser localement une baisse du débit de gaz dans ledit courant.

5. Procédé selon l'une des revendications 1 à 4 selon lequel l'alimentation principale génère un courant de mélange de gaz précurseurs, ***caractérisé en ce qu'on*** génère au moins une veine gazeuse d'un seul des gaz précurseurs, afin de modifier localement la proportion entre précurseurs dudit courant.

6. Système comprenant (a) des moyens pour fabriquer et/ou mettre en mouvement un substrat verrier de type ruban de verre float et (b) une buse (1) mettant en oeuvre le procédé selon l'une quelconque des revendications précédentes pour déposer un revêtement sur ledit substrat verrier, ladite buse étant adaptée de manière permettant l'alimentation en gaz dite autonome

7. Système selon la revendication 6, ***caractérisé en ce que*** la buse (1) est destinée à être disposée au-dessus de et transversalement à un ruban de verre float (2) et en ce qu'elle est munie, dans cette configuration en partie supérieure, d'autant de chambres d'admission (9) alimentées par l'alimentation en gaz principale que de courants à générer.

8. Système selon la revendication 6 ou 7, ***caractérisé en ce que*** l'alimentation principale comporte pour chaque courant à générer un conduit d'amenée de gaz commun (10) se distribuant en une pluralité d'amenées (11) débouchant dans la chambre d'admission (9) appropriée.

9. Système selon la revendication 8, caractérisé en ce que l'alimentation principale comporte pour chaque courant à générer une canalisation (10) véhiculant le gaz précurseur (ou le mélange de gaz précurseurs) approprié et dont une portion, notamment l'extrémité, est percée d'orifices (11) régulièrement répartis et est disposée dans et le long de la chambre d'admission (9) appropriée.

10. Système selon l'une des revendications 7 à 9, ***caractérisé en ce que*** la chambre d'admission (9) ou au moins une des chambres d'admission est alimentée en gaz par l'alimentation en gaz auxiliaire.

11. Système selon la revendication 10, ***caractérisé en ce que*** l'alimentation auxiliaire comporte une pluralité d'amenées de gaz (15) de configuration fixe pendant le fonctionnement de la buse (1); débouchant dans la (les) chambre(s) d'admission (9) et réparties régulièrement sur la longueur de ladite chambre.

12. Système selon la revendication 10, ***caractérisé en ce que*** l'alimentation auxiliaire comporte au moins une amenée de gaz (15) débouchant dans la (les) chambre(s) d'admission (9) et montée mobile pendant le fonctionnement de la buse (1), notamment selon un axe parallèle à la longueur de la (des) chambre(s) d'admission.

13. Système selon l'une des revendications 6 à 12, ***caractérisé en ce que*** le débit ou le profil de débit de la ou des veine(s) de gaz générée(s) par le(s) amenée(s) de gaz de l'alimentation auxiliaire est contrôlé par des moyens de contrôle de débit, du type vanne, sur ladite (lesdites) amenée(s) reliée(s) aux sources de gaz appropriées.

14. Système selon la revendication 13, ***caractérisé en ce que*** l'alimentation auxiliaire comporte une pluralité d'amenées de gaz (15) débouchant dans la chambre d'admission (9) en des points régulièrement répartis sur sa longueur, chaque amenée (15) étant munie d'une vanne apte à délivrer 0 à 100% d'un débit prédéterminé, et éventuellement tout débit intermédiaire entre ces deux valeurs.

15. Système selon l'une des revendications 6 à 14, ***caractérisé en ce que*** la régulation de l'alimentation auxiliaire est manuelle, notamment par commande manuelle des vannes des amenées de gaz de l'alimentation.

16. Système selon l'une des revendications 6 à 14, ***caractérisé en ce que*** la régulation de l'alimentation auxiliaire est automatisée, notamment par un contrôle automatique dans le temps des vannes des amenées de gaz de ladite alimentation, à l'aide d'une unité de contrôle (18) reliée à au moins un instrument de mesure de qualité ou d'épaisseur du revêtement (19) en aval de la buse (1).

17. Application du système selon l'une des revendications 6 à 16 au dépôt de couches sur un substrat verrier en mouvement à base de Si, O, C avec une alimentation principale générant un courant gazeux comprenant un précurseur de Si et un précurseur de C et une alimentation auxiliaire autonome générant si besoin au moins une veine gazeuse comprenant l'un ou l'autre des précurseurs, de préférence le précurseur de C.

18. Application du système selon l'une des revendications 6 à 17 au dépôt de couches sur un substrat verrier à base de nitrure métallique avec une alimentation principale générant un courant gazeux comportant un précurseur métallique et un précurseur azoté, soit un courant gazeux pour chacun des précurseurs et une alimentation auxiliaire autonome générant des veines de gaz contenant l'un des précurseurs, de préférence le précurseur métallique.

## Patentansprüche

1. Verfahren zur Verteilung eines oder mehrerer Ströme aus Vorläufergas/en oder einem Gemisch von Vorläufergas/en mittels einer Düse (1) auf der Oberfläche eines sich vorwärts bewegenden Glassubstrats (2) wie eines Bandes aus Floatglas, wobei das/die Gas/e in der Lage ist/sind, im Kontakt mit diesem durch eine Reaktion vom Typ Pyrolyse/Zersetzung eine Beschichtung zu bilden und die Düse mit einem Gasversorgungssystem ausgestattet ist, das eine Hauptgaszuführung für das Düsengehäuse umfasst, für welche ein Gaszuleitungsmittel verwendet wird, das für jeden zu erzeugenden Gasstrom gemeinsam ist, **dadurch gekennzeichnet, dass** die chemische Zusammensetzung des/der Gasstroms/Gasströme lokal modifiziert wird, der/die von der Hauptgaszuführung erzeugt wird/werden, indem in diesem/diesen Strom/Strömen oder in der Nähe davon wenigstens eine Gasschicht gebildet wird, die mindestens ein zur Bildung der Beschichtung erforderliches Vorläufergas enthält und durch eine Hilfsgaszuführung erzeugt wird, die gegenüber der Hauptgaszuführung autonom ist.

2. Verfahren nach Anspruch 1, **dadurch gekennzeichnet, dass,** um Unregelmäßigkeiten der Dicke oder Qualität der aufgebrachten Beschichtung zu korrigieren oder zu verhindern, die lokalen Inhomogenitäten des/der Gasstroms/Gasströme, der/die von der Hauptgaszuführung erzeugt wird/werden, beseitigt werden, indem in diesem/diesen Strom/Strömen oder in der Nähe davon wenigstens eine kompensatorische Gasschicht gebildet wird, deren Zusammensetzung, Durchfluss und räumliche Begrenzung geeignet sind und die mindestens eines der von der Hauptgaszuführung transportierten Vorläufergase enthält.

3. Verfahren nach Anspruch 1 oder 2, **dadurch gekennzeichnet, dass** durch das Gasversorgungssystem der Düse (1) Gasströme und Gasschichten mit laminarer Strömung erzeugt werden.

4. Verfahren nach einem der Ansprüche 1 bis 3, gemäß welchem durch die Hauptgaszuführung ein Strom aus einem Vorläufergasgemisch erzeugt wird, **dadurch gekennzeichnet, dass** wenigstens eine Gasschicht aus diesem Gasgemisch gebildet wird, um eine Verringerung des Gasdurchflusses jenes Stroms lokal zu kompensieren.

5. Verfahren nach einem der Ansprüche 1 bis 4, gemäß welchem durch die Hauptgaszuführung ein Strom aus einem Vorläufergasgemisch erzeugt wird, **dadurch gekennzeichnet, dass** wenigstens eine Gasschicht aus einem einzigen der Vorläufergase gebildet wird, um das Verhältnis zwischen den Vorläufern jenes Stroms lokal zu modifizieren.

6. System, das a) Mittel zur Herstellung und/oder Vorwärtsbewegung eines Glassubstrats vom Typ Floatglasband und b) eine Düse (1) für die Durchführung des Verfahrens nach einem der vorhergehenden Ansprüche zum Aufbringen einer Beschichtung auf dem Glassubstrat umfasst, wobei die Düse derart angepasst ist, dass sie eine autonome Gaszufuhr erlaubt.

7. System nach Anspruch 6, **dadurch gekennzeichnet**, dass die Düse (1) vorgesehen ist, über und quer zu einem Floatglasband (2) angeordnet zu werden, **und dass** sie in dieser Gestaltung im oberen Teil mit so vielen von der Hauptgaszuführung versorgten Gaseinströmkammern (9) wie zu erzeugenden Gasströmen versehen ist.

8. System nach Anspruch 6 oder 7, **dadurch gekennzeichnet**, **dass** die Hauptgaszuführung für jeden zu erzeugenden Gasstrom eine gemeinsame Gaszuleitung (10) umfasst, die sich in eine Vielzahl von Zuleitungen (11) aufteilt, die in die entsprechende Gaseinströmkammer (9) münden.

9. System nach Anspruch 8, **dadurch gekennzeichnet, dass** die Hauptgaszuführung für jeden zu erzeugenden Gasstrom eine geeignete Gaszuleitung (10) umfasst, die das Vorläufergas (oder das Gemisch aus Vorläufergasen) transportiert und wovon ein Teil, insbesondere das Ende, mit regelmäßig verteilten Öffnungen (11) durchbohrt und in und entlang der entsprechenden Gaseinströmkammer (9) angeordnet ist.

10. System nach einem der Ansprüche 7 bis 9, **dadurch gekennzeichnet, dass** die Gaseinströmkammer (9) oder mindestens eine der Gaseinströmkammern durch die Hilfsgaszuführung mit Gas versorgt wird.

11. System nach Anspruch 10, **dadurch gekennzeichnet, dass** die Hilfsgaszuführung eine Vielzahl von Gaszuleitungen (15) umfasst, deren Gestaltung während der Tätigkeit der Düse (1) feststeht, die in die Gaseinströmkammer/n (9) münden und welche über die Länge dieser Kammer/n regelmäßig verteilt sind.

12. System nach Anspruch 10, **dadurch gekennzeichnet, dass** die Hilfsgaszuführung mindestens eine Gaszuleitung (15) umfasst, welche in die Gaseinströmkammer/n (9) mündet und während der Tätigkeit der Düse (1) beweglich angebracht ist, insbesondere in einer Achse, die zur Länge der Gaseinströmkammer/n parallel steht.

13. System nach einem der Ansprüche 6 bis 12, **dadurch gekennzeichnet, dass** der Durchfluss oder das Profil des Durchflusses der Gasschicht/en, die durch die Gaszuleitung/en der Hilfsgaszuführung gebildet wird/werden, von Mitteln zur Durchflussregelung wie einem Ventil auf dieser/diesen Gaszuleitung/en, die an geeignete Gasquellen angeschlossen ist/sind, geregelt wird.

14. System nach Anspruch 13, **dadurch gekennzeichnet, dass** die Hilfsgaszuführung eine Vielzahl von Gaszuleitungen (15) umfasst, die in die Gaseinströmkammer (9) an über deren Länge regelmäßig verteilten Punkten münden, wobei jede Gasleitung (15) mit einem Ventil versehen ist, das in der Lage ist, 0 bis 100 % eines festgelegten Durchflusses und gegebenenfalls einen beliebigen, zwischen diesen zwei Werten liegenden Durchfluss abzugeben.

15. System nach einem der Ansprüche 6 bis 14, **dadurch gekennzeichnet, dass** die Regelung der Hilfsgaszuführung manuelle ist, insbesondere durch manuelle Steuerung der Ventile der Gaszuleitungen dieser Zuführung.

16. System nach einem der Ansprüche 6 bis 14, **dadurch gekennzeichnet, dass** die Regelung der Hilfsgaszuführung automatisiert ist, insbesondere durch eine automatische Zeitsteuerung der Ventile der Gaszuleitungen dieser Zuführung, mittels einer Regeleinheit (18), an welche mindestens ein Gerät (19) zur Messung der Qualität oder der Dicke der Beschichtung nach der Düse (1) angeschlossen ist.

17. Verwendung des Systems nach einem der Ansprüche 6 bis 16 zum Aufbringen von Schichten auf der Basis von Si, O und C auf einem sich bewegenden Glassubstrat mit einer Hauptgaszuführung, die einen Gasstrom erzeugt, der einen Si-Vorläufer und einen C-Vorläufer enthält, und einer autonomen Hilfsgaszuführung, die erforderlichenfalls mindestens eine Gasschicht bildet, die einen der beiden Vorläufer und vorzugsweise den C-Vorläufer enthält.

18. Verwendung des Systems nach einem der Ansprüche 6 bis 17 zum Aufbringen von Schichten auf der Basis von Metallnitrid auf einem Glassubstrat mit einer Hauptgaszuführung, die einen Gasstrom erzeugt, der einen Metall-Vorläufer und einen Stickstoff-Vorläufer, d.h. einen Gasstrom für jeden der Vorläufer, enthält, und einer autonomen Hilfsgaszuführung, die Gasschichten bildet, die einen der Vorläufer, vorzugsweise den für das Metall, enthalten.

## Claims

1. Method of distributing the stream(s) of precursor gas(es) or of a mixture of precursor gases on the surface of a moving glass substrate (2) of the float glass ribbon type by means of a nozzle (1), the gas(es) being capable of forming, in contact with the glass, a coating by a reaction of the pyrolysis/decomposition type, the said nozzle being provided with a gas supply system comprising a supply of the said main gas to the nozzle body using a gas feed means common to each stream to be generated, ***characterized in that*** the chemical composition of the stream(s) generated by the main supply is modified locally by generating in or near the said stream(s) at least one, gas flow containing at least one precursor gas needed for forming the coating and generated by a so-called auxiliary gas supply which is autonomous with respect to the main gas supply.

2. Method according to Claim 1, ***characterized in that,*** for the purpose of correcting or preventing any irregularity in the thickness or the quality of the coating deposited, the local inhomogeneities of the stream(s) generated by the main supply are compensated for by generating, in or near the said stream(s), at least one compensating gas flow containing at least one of the precursor gases conveyed by the main supply and of a suitable composition, suitable flow rate and suitable location.

3. Method according to Claim 1 or 2, ***characterized in that*** laminar-flow gas streams and flows are generated by the supply system for the nozzle (1).

4. Method according to one of Claims 1 to 3, in which the main supply generates a stream of a precursor gas mixture, ***characterized in that*** at least one stream of the said gas mixture is generated so as to locally compensate for a reduction in the gas flow rate in the said stream.

5. Method according to one of Claims 1 to 4, in which the main supply generates a stream of a precursor gas mixture, ***characterized in that*** at least one gas flow of only one of the precursor gases is generated so as to locally modify the proportion between precursors in the said stream.

6. System comprising (a) means for manufacturing and/or moving a glass substrate of the float glass ribbon type and (b) a nozzle (1) implementing the method according to any one of the preceding claims for depositing a coating on the said glass substrate, the said nozzle being designed in a manner allowing so-called autonomous gas supply.

7. System according to Claim 6, ***characterized in that*** the nozzle (1) is intended to be placed above and transversely to a float glass ribbon (2) ***and in that*** it is provided, in this configuration in the upper part, with as many intake chambers (9) supplied by the main gas supply as there are streams to be generated.

8. System according to Claim 6 or 7, ***characterized in that*** the main supply comprises, for each stream to be generated, a common gas feed duct (10) delivering into a plurality of feeds (11) running into the appropriate intake chamber (9).

9. System according to Claim 8, ***characterized in that*** the main supply comprises, for each stream to be generated, a pipe (10) conveying the appropriate precursor gas (or mixture of precursor gases) and one portion of which pipe, especially the end, is drilled with uniformly distributed holes (11) and is placed in and along the appropriate intake chamber (9).

10. System according to one of Claims 7 to 9, ***characterized in that*** the intake chamber (9) or at least one of the intake chambers is supplied with gas by the auxiliary gas supply.

11. System according to Claim 10, ***characterized in that*** the auxiliary supply comprises a plurality of gas feeds (15) which are in a fixed configuration during the operation of the nozzle (1), run into the intake chamber(s) (9) and are uniformly distributed over the length of the said chamber.

12. System according to Claim 10, ***characterized in that*** the auxiliary supply comprises at least one gas feed (15) running into the intake chamber(s) (9) and mounted so as to move during the operation of the nozzle (1), especially along an axis parallel to the length of the intake chamber(s).

13. System according to one of Claims 6 to 12, ***characterized in that*** the flow rate or the flow rate profile of the gas stream or streams generated by the gas feed(s) of the auxiliary supply is controlled by flow-rate control means, of the valve type, on the said feed(s) connected to the appropriate gas sources.

14. System according to Claim 13, ***characterized in that*** the auxiliary supply comprises a plurality of gas feeds (15) running into the intake chamber (9) at points uniformly distributed over its length, each feed (15) being fitted with a valve capable of delivering gas at 0 to 100% of a predetermined flow rate, and possibly any intermediate flow rate between these two values.

15. System according to one of Claims 6 to 14, ***characterized in that*** the auxiliary supply is regulated manually, especially by manually controlling the valves of the gas feeds of the supply.

16. System according to one of the Claims 6 to 14, ***characterized in that*** the auxiliary supply is automatically regulated, especially by automatically controlling over time the valves of the gas feeds of the said supply, by means of a control unit (18) being connected, downstream of the nozzle (1), to at least one instrument (19) for measuring the quality or the thickness of the coating.

17. Application of the system according to one of Claims 6 to 16 to the deposition, on a moving glass substrate, of layers based on Si, O, and C with a main supply generating a gas stream containing a Si precursor and a C precursor and an autonomous auxiliary supply generating, if required, at least one gas flow containing one or other of the precursors, preferably the C precursor.

18. Application of the system according to one of Claims 6 to 17, to the deposition on a glass substrate of layers based on a metal nitride with a main supply generating a gas stream containing a metal precursor and a nitrogen precursor, i.e. a gas stream for each of the precursors, and an autonomous auxiliary supply generating gas flows containing one of the precursors, preferably the metal precursor.
